# EUROPEAN PATENT APPLICATION

(11) **EP 4 513 295 A1**
(43) Date of publication of application: **26.02.2025**
(21) Application number: 23192642.9
(22) Date of filing: 22.08.2023
(51) Int. Cl.: G06F 1/16

(54) **WEARABLE BI-STABLE GRAPHICAL HUMAN MACHINE INTERFACE**

(71) Applicant: Airbus Defence and Space GmbH, 82024 Taufkirchen (DE)
(72) Inventor: Eisenberg, Till, 82024 Taufkirchen (DE); Wildt, Gabriel, 82024 Taufkirchen (DE); Reichert, Gerhard, 82024 Taufkirchen (DE)
(74) Representative: Schornack, Oliver

(57) **Abstract**

The present disclosure relates to a wearable human machine interface device (100) having a flexible display (112) that can achieve a flat or bent shape due to at least one bi-stable spring band (140) mounted to a bendable support (130) of the flexible display (112).

## Description

The present disclosure generally relates to a wearable human machine interface device. Particularly, the present disclosure relates to a wearable display device having a flexible display that can achieve a straight position and a bent position.

Conventional human machine interface devices, such as computers, laptops, tablet computers, etc. provide sufficiently large display panels, and are sometimes equipped with touch screen technology for simultaneous visual output and user input. However, such devices are large, bulky and difficult to place in certain work spaces, for example, inside of a vehicle.

On the other hand, so-called smart watches can be worn at a wrist of a user, so that they are not in the way during certain work processes and do not have to be placed on unstable surfaces. However, the display size of such smart watches is very small, such as in the range of approximately 3 to 5 cm.

It is therefore an object of the present disclosure to provide a human machine interface device with improved usability.

This object is solved by the present invention as defined in the independent claim. Preferred embodiments are defined by the dependent claims.

According to a first aspect to better understand the present disclosure, a wearable human machine interface device comprises a flexible display device configured to be bent. The display device includes a bendable support, a flexible display attached to a first side of the bendable support, and at least one bi-stable spring band mounted on a second side of the bendable support, wherein the second side is opposite to the first side. The at least one bi-stable spring band has a first stable equilibrium position when being straight.

Thus, the bi-stable spring band, when engaging the first stable equilibrium position, brings and/or holds the bendable support and the attached flexible display in(to) a flat shape, i.e. the bendable support and/or the flexible display is/are arranged substantially in a two-dimensional plane. This allows using the flexible display in the form of a mobile device or computer. Due to the flat display the entire display can be seen and used for input and output of the human machine interface device.

On the other hand, if the bi-stable spring band is not in the first stable equilibrium position, the bi-stable spring band bends or rolls. Thus, the flexible display can be arranged in a more compact position, so that it does not interfere with other items in the work space. At the same time, a portion of the flexible display can still face the user, so that its input and output capabilities can still be used, at least partially.

As a mere example, the bi-stable spring band can be designed in such a manner, that a radius or curvature of the display device corresponds to a particular extremity of the user or other body portion. Thus, the bent display device can be arranged around an arm or a leg of the user, so that the human machine interface device becomes a wearable device. Alternatively, the display device can be bent around a component within the work space of the user, so that the device can be safely mounted anywhere near the user.

Moving the flexible display (together with the bendable support) from the flat state into a bent or rolled state can be performed manually. Specifically, when starting in the first stable equilibrium position of the bi-stable spring band, the user can bend or roll the bendable support (and hence the flexible display) by grapping the bendable support and bending or pushing or pulling the bendable support (e.g. at one or two free ends thereof). Once the force acting on the bi-stable spring band due to this user induced force or movement exceeds the restraint or barrier of the first stable equilibrium state of the bi-stable spring band, an elastic force of the bi-stable spring band towards a second stable equilibrium state and position acts on the mounted bendable support. Thus, the bendable support and flexible display will bend or roll due to the elastic force of the bi-stable spring band.

In the opposite direction, the user has to pull or straighten the flexible display and bendable support against the elastic force of the bi-stable spring band. Once the restraint or barrier (force) of the first stable equilibrium state is reached or exceeded, the bi-stable spring band will achieve the first stable equilibrium position, i.e. being straight. Thus, the bendable support and flexible display will achieve a flat posture supported by the bi-stable spring band being in the first stable equilibrium state.

In an implementation variant, the wearable device can further comprise a first holder coupled to the second side of the bendable support and holding a first end of the bi-stable spring band, and a second holder coupled to the second side of the bendable support and holding a second end of the bi-stable spring band. Thus, when the bi-stable spring band moves between the first stable equilibrium position and a bent or rolled position, the first and second holder move relative to one another. In other words, the bending or rolling force of the bi-stable spring band is transferred via the first and second holders into the bendable support and, hence, the flexible display. The flexible display, hence, follows the bending or rolling movement of the bi-stable spring band.

As a mere example, the first and second holders can be arranged at opposite ends of the flexible display, i.e. portions of the bendable support corresponding to the opposite ends of the flexible display. This allows bending or rolling the entire flexible display in a corresponding manner to the shape, which the bi-stable spring band achieves.

It is to be understood, that the first holder and/or the second holder can likewise be arranged at positions closer to a centre of the flexible display. This allows provision of a portion of the flexible display being flat irrespective of a state of the bi-stable spring band. This portion of the flexible display may still be bent manually by the user due to the bendable support. Alternatively, the corresponding portion of the bendable support, i.e. a portion protruding from the first or second holder, may be made rather rigid (stiff), so that this portion of the flexible display is always flat. Still alternatively, the bending support can be configured to entirely bent, when the bi-stable spring band bends or rolls.

In another implementation variant, at least one of the first and second holders can form a floating connection for the respective bi-stable spring band. Thus, the first and/or second holder allows a relative movement between the bi-stable spring band and the corresponding holder and bendable support. This allows compensating a length difference between the bendable support and the bi-stable spring band during a bending or rolling movement of the bi-stable spring band.

As a mere example, the floating connection can allow a relative movement between the respective bi-stable spring band and the at least one of the first and second holders in a longitudinal direction of the bi-stable spring band. The longitudinal direction of the bi-stable spring band extends along the bi-stable spring band. A transverse direction, being substantially perpendicular to the longitudinal direction, is arranged substantially parallel to an axis around which the bi-stable spring band bends or rolls.

In a further implementation variant, the bendable support can comprise a flexible layer, and a plurality of transverse bars attached to the flexible layer and arranged in a transverse direction being substantially perpendicular to the longitudinal direction of the bi-stable spring band. The flexible layer substantially extends along the longitudinal direction of the bi-stable spring band. For instance, the flexible layer can span over the entire flexible display, in order to support the flexible display in the longitudinal direction of the bi-stable spring band.

As a mere example, the flexible layer forms the first side of the bendable support. Thus, the flexible layer forms the portion of the bendable support to which the flexible display is attached.

In yet a further implementation variant, the flexible layer may extend in the transverse direction of the bi-stable spring band spanning over the entire flexible display. Alternatively, the flexible layer has an extent in the transverse direction that is shorter than an extent of the flexible display in the transverse direction.

Further alternatively, the flexible layer is provided in form of one or more stripes, each extending in the transverse direction of the bi-stable spring band and spanning over a portion of the extent of the flexible display. In this case, each stripe of the flexible layer can be arranged in a corresponding manner with one of the at least one bi-stable spring band, or may be arranged adjacent thereto (in a top view of the display device facing substantially perpendicular on the flat flexible display).

In another implementation variant, the plurality of transverse bars can be arranged spaced apart from one another with a pairwise distance. In other words, a pair of adjacent transverse bars is spaced apart by the distance. The gap between such pair of transverse bars can be covered or filled by the flexible layer. Thus, the flexible layer allows bending of the bending support, while the transverse bars provide a certain rigidity or stiffness of the bending support, particularly in the transverse direction. A support in the longitudinal direction can be provided by the bi-stable spring band.

In yet another implementation variant, the distance between transverse bars can define a minimum possible radius of the bendable support. Since each transverse bar has a thickness in a direction substantially perpendicular to the longitudinal direction and the transverse direction, a pair of adjacent transverse bars will contact each other, if the bendable support is bent or rolled by the bi-stable spring band. Thus, the shorter the distance between the pair of transverse bars, the larger will be the minimum radius, which the bendable support can achieve, as the transverse bars when contacting each other block a further bending or rolling. The minimum radius corresponds to the curvature that can be achieved before the blocking of the transverse bars occurs. A large minimum radius means a curvature closer to the flat state and a small minimum radius means a curvature closer to a circle. It is to be understood that all distances between all pairs of adjacent transverse bars can be the same, so that the bendable support and the flexible display will achieve a circular shape.

In a further implementation variant, the distance between transverse bars can vary along the longitudinal direction of the bi-stable spring band, so as to achieve a non-circular cross-section of the bendable support, when the bi-stable spring band bends or rolls. Thus, portions of the flexible display which are rather flat, and other portions having a greater flexion/curvature can be achieved based on the distance(s).

In an implementation variant, the bi-stable spring band is configured to achieve a second stable equilibrium position when being rolled. This second stable equilibrium position will best be seen, if the bi-stable spring band is bent or rolled without being attached to the bending support. The second stable equilibrium position can form a complete circle of the bi-stable spring band, or can form an arc of a circle. In the second stable equilibrium position/state, the bi-stable spring band does not induce any (elastic) force, unless the bi-stable spring band is brought out of the second stable equilibrium position/state.

In a further implementation variant, the bendable support can be configured to allow the bi-stable spring band to achieve the second stable equilibrium position. In other words, without the bi-stable spring band the bendable support could be bent or rolled at least to or even further than the second stable equilibrium position of the bi-stable spring band.

Alternatively, the bendable support can be configured to achieve a fix bent, rolled or otherwise curved shape, before the bi-stable spring band reaches the second stable equilibrium position. This allows moving the bendable support by the (elastic force of the) bi-stable spring band into the fixed shape. As a mere example, the transverse bars and/or the distance between two adjacent transverse bars can be chosen in such a manner, that the bendable support achieves the cross-sectional shape, where the transverse bars contact each other and form the fixed bent, rolled or otherwise curved shape, before the bi-stable spring band achieves the second stable equilibrium position. Thus, the elastic force of the bi-stable spring band can still act onto the first and second holders and, hence, onto the bendable support.

In a further implementation variant, the wearable device can further comprise a side housing configured to be coupled to the bendable support. Such side housing can be used as a grip or handle of the display device. The side housing may have an ergonomically optimised form, in order to provide a better grip of the display device when hold in a hand by the user. The side housing can be arranged along an edge of the flexible display.

Alternatively or additionally, the side housing can further be configured to house a battery and/or computing components electrically connected to the flexible display. Thus, any electronic or electric component that is not directly required at the flexible display can be provided in the side housing. This further shifts the major weight of the display device, for example, the battery, into the side housing. This facilitates holding the display device in a hand (gripping the side housing).

In yet a further implementation variant, the side housing can be further configured to be detachably coupled to the bendable support. This allows replacing the side housing and/or using the display device with a different power supply and/or computing source.

As a mere example, an electric connection between the bendable support and the side housing may be provided.

In another implementation variant, the wearable device can further comprise a front frame arranged at the first side of the bendable support and covering a perimeter of the flexible display. Thus, the flexible display can be fixedly mounted to the bendable support by the front frame. At the same time, the front frame can cover any electric and/or electronic lines and/or devices required to operate the flexible display.

In a further implementation variant, the wearable device can further comprise a wearable holder configured to be worn by a user. The flexible display device can further be configured to be coupled to the wearable holder. The display device, hence, becomes a wearable device when coupled to the wearable holder.

As a mere example, the axis, around which the bi-stable spring band bends or rolls, can run through the wearable holder or is located underneath the wearable holder, if the display device is coupled on top of the wearable holder. In other words, the flexible display encompasses the wearable holder at least partially, when the bi-stable spring band bends or rolls.

Furthermore, if the side housing houses a battery and/or other electric/electronic components, the display device may be coupled to the wearable holder at or close to the side housing. Thus, the major weight of the display device, i.e., the side housing and its components, is located close to the wearable holder and, hence, ergonomically optimal.

In yet another implementation variant, the wearable holder can be configured to be attached to an extremity, such as a forearm or a leg, of the user. As a mere example, the wearable holder can have a cross-sectional shape of an arc of a circle or an ellipse, so that the wearable holder can be clipped onto the forearm or leg. This allows easy attachment or detachment of the wearable device. For example, the wearable holder can be manufactured from an elastic material, such as a metal and/or plastic material.

Alternatively, the wearable holder can have a continuous cross-sectional shape, which allows wearing the wearable holder like a portion of a sleeve or trousers. For example, the wearable holder can be manufactured from an elastic material, such as a metal or plastic material, a fabric, a rubber material, a strap, or a combination thereof.

In any case, when the wearable holder is attached to a forearm or leg of the user, the longitudinal direction of the bi-stable spring band may be arranged in such a manner that the bi-stable spring band bends or rolls around the forearm or leg. Thus, in the bent or rolled position the display device is arranged close to the forearm or leg, so that it does not protrude far from the user and does not hinder the user during any work task. When bringing the bi-stable spring band into the first stable equilibrium position, the user can bring the forearm or a leg portion holding the wearable device in front of the body and face of the user, so that the entire flexible display is in a position of good visibility. As a mere example, wearing the wearable device at a leg of the user allows the worker operating in sitting posture. This further allows using the wearable device also by pilots or the like.

In a further implementation variant, the display device can be coupled to the wearable holder by means of a screw, and/or a hook and loop fastener, and/or a sliding connection. It is to be understood that these fastening means are only exemplary and nonlimiting. For instance, a combination thereof as well as a strap band or the like can be used to mount the display device to the wearable holder. In any case, if the user desires, the display device can be removed from the wearable holder, so that the display device can be used as any other mobile terminal, for example, on a desk.

In yet a further implementation variant, the flexible display can have a size in at least one direction of at least 6 cm, preferably of at least 8 cm, and most preferably of at least 10 cm. It is to be understood that the size of the flexible display is not limiting the present disclosure. However, the larger the display size, the more information can be input and output, and the disclosed wearable device allows attaching even larger devices to the user, such as at a forearm of the user. The wearable device and, particularly, its bending and being flat capability, functions independent of the size of the flexible display.

The present disclosure is not restricted to the aspects and variants in the described form and order. Specifically, the description of aspects and variants is not to be understood as a specific limiting grouping of features. It is to be understood that the present disclosure also covers combinations of the aspects and variants. Thus, each variant or optional feature can be combined with any other aspect, variant, optional feature or even combinations thereof.

In the following, the present disclosure will further be described with reference to exemplary implementations illustrated in the figures, in which:
- Figure 1: schematically illustrates a wearable device attached to a forearm of a user and in a substantially flat state;
- Figure 2: schematically illustrates a wearable device attached to a forearm of a user and in a bent or rolled state;
- Figure 3: schematically illustrates a front side of a display device of the wearable device in a substantially flat state;
- Figure 4: schematically illustrates a perspective side view of a display device of the wearable device in a bent or rolled state;
- Figure 5: schematically illustrates a back side of a display device of the wearable device in a substantially flat state;
- Figure 6: schematically illustrates details of the back side of the display device of Figure 5; and
- Figure 7: schematically illustrates details of a cross-section of a bendable support of the wearable device.

In the following description, for purposes of explanation and not limitation, specific details are set forth in order to provide a thorough understanding of the present disclosure. It will be apparent to one skilled in the art that the present disclosure may be practiced in other implementations that depart from these specific details.

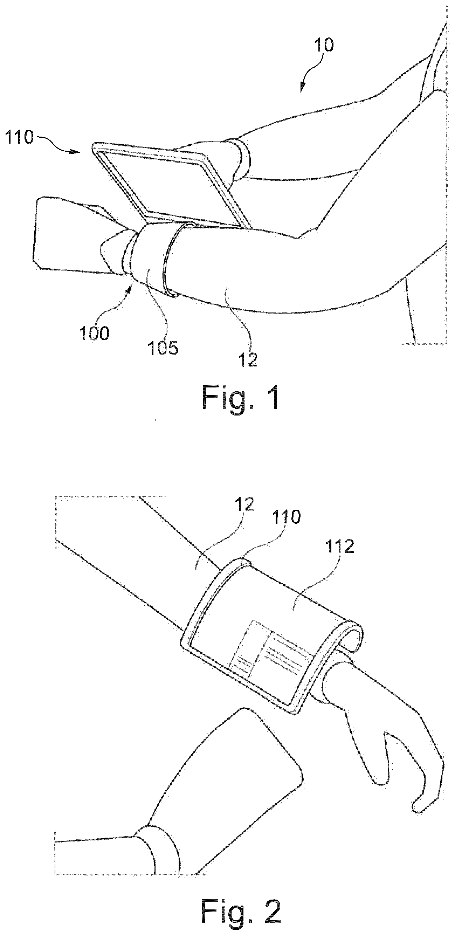

Figure 1 schematically illustrates a wearable device 100 attached to a forearm 12 of a user 10 and in a substantially flat state. The wearable device 100 can include a wearable holder 105 configured to be worn by the user 10, and a flexible display device 110 configured to be bent and optionally be coupled to the wearable holder 105. In Figure 1 the wearable device 100 is illustrated in a way where the user 10 wears the device 100 like a watch, for example, at a wrist of the forearm 12 of the user 10. It is to be understood that the wearable device 100 can likewise be worn at a lack or other portion of the body of the user 10. The display device 110 can be attached to the wearable holder 105, so that the user 10 can operate the display device 110 with the other hand, while the hand of the forearm 12 where the wearable device 100 is attached is still free, for example, for using a tool or the like.

The wearable holder 105 can include a clip, a strap, a band or the like (not explicitly illustrated) that can be attached to the forearm 12 of the user 10.

Figure 2 schematically illustrates a wearable device 100 attached to a forearm 12 of a user 10 and in a bent or rolled state. The description of this particular body position is exemplary, and the wearable device 100 can likewise be attached to a leg (not illustrated) the user 10 or the like. The wearable device 100 can be the same as in Figure 1. Figure 2 shows the front side of the display device 110, which includes a flexible display 112. As can be derived from Figures 1 and 2, the flexible display 112 can achieve a flat state (as in Figure 1) and a bent or rolled state (as in Figure 2). In the flat state, the entire flexible display 112 can be used as a regular mobile terminal or computing device, such as a laptop, a tablet computer or the like, but worn by the user 10 instead of placing the device on a surface where it may be unstable. In the bent or rolled state, the flexible display 112 covers or encloses or encompasses a portion of the forearm 12 or leg of the user 10. Thus, the flexible display 112 does not hinder the user during working processes involving the forearm 12 or leg. The display device 110 does not protrude from the forearm 12 or leg as far as in the flat state.

The wearable device 100 may not include the wearable holder 105, but (deviating from the illustration of Figure 1) is bent around the portion of the body, such as the forearm 12 or leg. In Figure 2 the wearable holder 105 is not visible or may not be present at all. Thus, the wearable device 100 can be worn by simply bending or clipping the flexible display device 110 around the body portion.

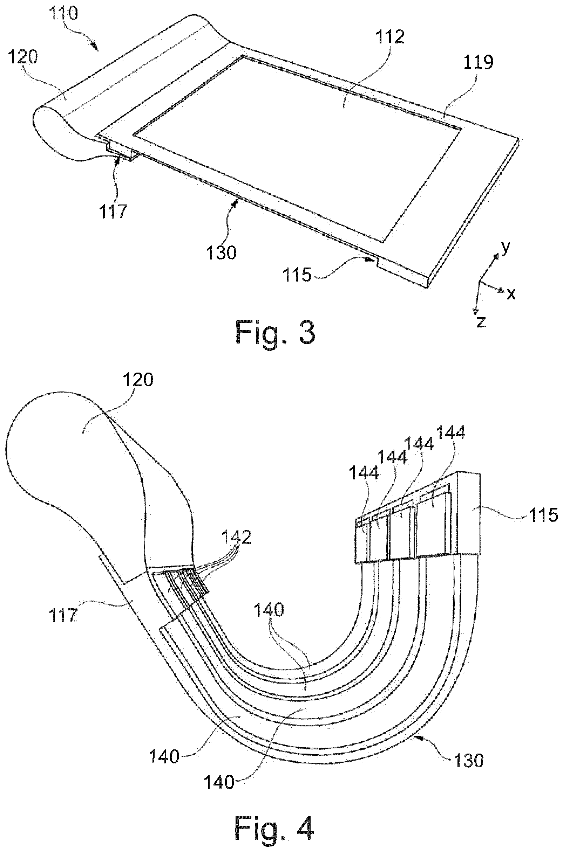

Figure 3 schematically illustrates a first side (front side) of a flexible display device 110 of the wearable device 100 in a substantially flat state. The display device 110 is detached from the wearable holder 105 (if present at all). This allows using the display device 110 as a regular human machine interface device. The flexible display device 110 (for example as in Figure 2) includes a bendable support 130 and the flexible display 112 is attached to a first side of the bendable support 130. A front frame 119 is arranged at the first side of the bendable support 130. The front frame 119 covers a perimeter of the flexible display 112 and allows holding the flexible display 112 to the bendable support 130.

The wearable device 100 can further comprise a side housing 120 configured to be coupled to the bendable support 130. For example, the side housing 120 can be further configured to house a battery and/or computing component (not illustrated) electrically connected to the flexible display 112. The bendable support 130 and/or the side housing 120 can include coupling means 117, which allow detachably coupling of the bendable support 130 and the side housing 120. As a mere example, the coupling means 117 may include a clip or sliding means, by which the bendable support 130 can be clipped or slit to the side housing 120 or vice versa.

The display device 110 in the flat state can be arranged in a substantially two-dimensional plane. This plane can be defined by a longitudinal direction or axis (X-axis) of the display device 110 and a transverse direction or axis (Y-axis) of the display device 110. The transverse direction or axis is perpendicular to the longitudinal direction or axis. Furthermore, perpendicular to the longitudinal and transverse direction or axis is a thickness or height direction (Z-axis) of the display device 110.

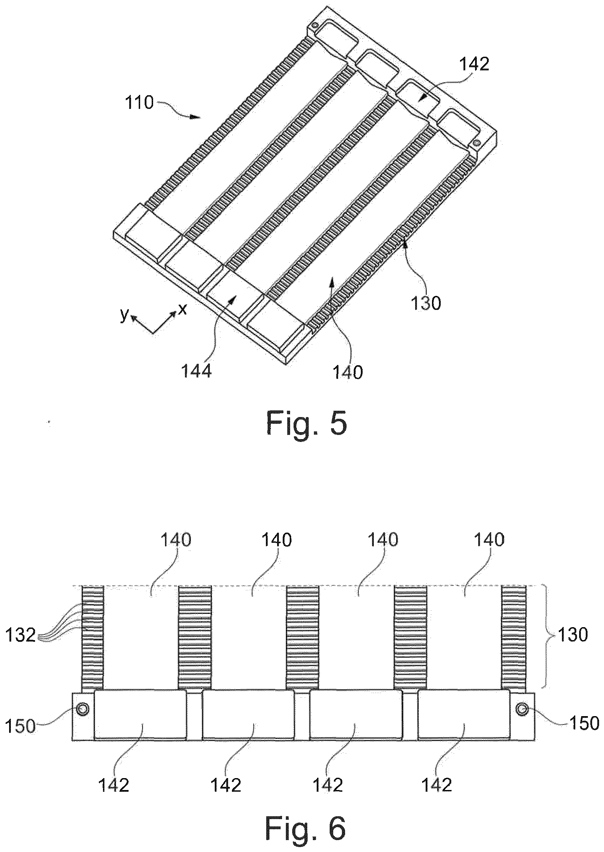

At each end of the display device 110 in the longitudinal direction of the bendable support 130 may be a side frame 115, 117, which provides rigidity to the bendable support 130 and, hence, to the flexible display 112. For instance, the side frame 115 provides a better gripping area for the user, when holding, bending or flattening the display device 110 as will be explained in more detail below with respect to Figures 4 and 5. Furthermore, the side frame 117 may be configured to include the coupling means. Additionally, one or both side frames 115, 117 may be configured to form a stand for the wearable device 100, if it is placed on a desk or the like in a flat state of the flexible display device 110.

Figure 4 schematically illustrates a perspective side view of a display device 110 of the wearable device 100 in a bent or rolled state, where the back side is visible. Specifically, the display device 110 further includes at least one bi-stable spring band 140 (Figure 4 illustrates four bi-stable spring bands). The bi-stable spring bands 140 are in a bent or rolled state.

The wearable device 100 further comprises a first holder 142 and a second holder 144, each coupled to a second side (back side) of the bendable support 130. The first holder 142 holds a first end of the bi-stable spring band 140, and the second holder 144 holds a second end of the bi-stable spring band 140. In the bent or rolled state the bi-stable spring band 140 yield an elastic force onto each of the first and second holders 142, 144. Additionally or alternatively, the bi-stable spring band 140 can contact the bendable support 130 at its back side, so that additional support of the bendable support 130 is provided.

The first holder 142 and/or the second holder 144 may form a floating connection, which allows a relative movement in the longitudinal direction between the respective first and/or second holder 142, 144 and the respective bi-stable spring band 140. This particularly allows compensating for any change of length between the bendable support 130 and the bi-stable spring band 140.

Figure 5 schematically illustrates a back side of the flexible display device 110 of the wearable device 100 in a substantially flat state. The display device 110 can be the same as in Figure 4.

In Figure 5 the at least one bi-stable spring band 140 has achieved a first stable equilibrium position, where the bi-stable spring band 140 is (longitudinally) straight. Thus, the bendable support 130 and the flexible display 112 attached thereto are in a flat state supported by the first stable equilibrium position of the at least one bi-stable spring band 140. As a mere example, the at least one bi-stable spring band 140 can achieve a curved cross-sectional shape or bowl-like shape over its entire longitudinal direction (X-axis), i.e. its length. Figure 5 illustrates such shape as a concave shape of the at least one bi-stable spring band 140, where the at least one bi-stable spring band 140 bends (in its transverse direction (Y-axis)) towards the bendable support 130. It is to be understood that this is only one example, and the at least one bi-stable spring band 140 can likewise bend to a convex shape, where a middle portion of the bi-stable spring band 140 is further away from the bendable support 130 than the side edges. In this position, the flexible display device 110 can be used as a regular computing device, such as a laptop or tablet.

With respect to Figures 4 and 5, when a force is exerted onto at least one of the two sides 115, 117 of the display device 110 (and/or on the side housing 120), such force acts against the first stable equilibrium position/state. Once a restraint or barrier force is exceeded, the at least one bi-stable spring band 140 will release an elastic force and will work towards a second stable equilibrium position, for example, as illustrated in Figure 4. In the second stable equilibrium position (or actually after leaving the first stable equilibrium position) a cross-sectional shape (cut along the transverse direction) of the at least one bi-stable spring band 140 may be rather flat instead of curved. Thus, the at least one bi-stable spring band 140 forms a leaf or flat spring with an elastic force pulling the bi-stable spring band 140 into the bent or rolled position.

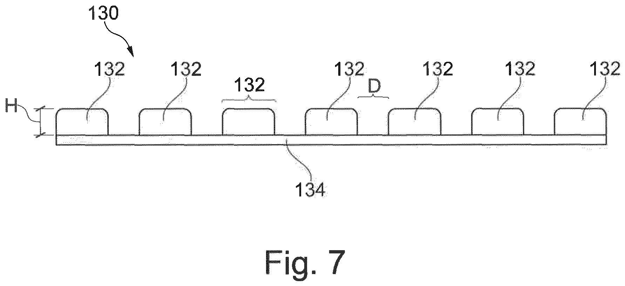

The bendable support 130 follows the movement of the at least one bi-stable spring band 140. This may be achieved by the structure of the bendable support 130, which will be described with respect to Figures 6 and 7.

Figure 6 schematically illustrates details of the back side of the display device 110 of Figure 5, and Figure 7 schematically illustrates details of a cross-section of the bendable support 130 of the wearable device 100. Specifically, the bendable support 130 comprises a flexible layer 134 and a plurality of transverse bars 132. The transverse bars 132 are attached to the flexible layer 134. Although Figure 7 illustrates the transverse bars 132 as being attached to a surface of the flexible layer 134, it is to be understood that the flexible layer 134 can also be arranged between the transverse bars 132. In other words, the flexible layer 134 can be arranged between two adjacent transverse bars 132.

The transverse bars 132 are arranged in a transverse direction (Y-axis) of the display device 110 (as well as of the bi-stable spring band 140). Thus, when the bi-stable spring band 140 is bent or rolled, the flexible layer 134 will follow this bending or rolling, while the transverse bars 132 will move towards one another on one side thereof (for example, the upper side in Figure 7). The flexible layer 134 can form a side, where the flexible display 112 is attached to. The transverse bars 132 can achieve a rigid or stiff support for the flexible display 112 in the transverse direction. The flexible layer 134 together with the bi-stable spring band 140 (and partially also the transverse bars 132) provide a support for the flexible display 112 in the longitudinal direction.

The plurality of transverse bars 132 can be arranged spaced apart from one another having a pairwise distance D (Figure 7) therebetween. The distance D defines a minimum possible radius of the bendable support 130. In other words, once the edges of the transverse bars 132 contact one another, a further bending or rolling of the bendable support 130 is not possible. Furthermore, the height H (Figure 7) of the transverse bars 132 likewise influence the minimum possible radius of the bendable support 130.

It is to be understood that in Figure 4 the second stable equilibrium position of the bi-stable spring band 140 may be reached or not. As indicated, the bi-stable spring band 140 exerts an elastic force onto the bendable support 130 when leaving the first stable equilibrium position and trying to reach the second stable equilibrium position. When, however, the transverse bars 132, come into contact with one another before the second stable equilibrium position is reached, the bendable support achieves a fixed position (in a curved, bent and/or rolled shape). In this situation, the elastic force of the bi-stable spring band 140 still acts onto the first and second holders 142, 144 and, hence, onto the bendable support 130.

By varying the distance D and/or the height H of the transverse bars 132 along the longitudinal direction (X-axis), the shape of the bendable support 130 can be predefined. In other words, if all transverse bars 132 have the same intermediate distance D and the same height H, a substantially circular shape will be achieved by the bendable support 130. If, however, the distance D and/or the height H varies along the longitudinal direction, areas of different curvature/flexion of the bendable support 130 can be achieved.

Alternatively, the bi-stable spring band 140 may reach the second stable equilibrium position before the transverse bars 132 come into contact with one another. In this case, the flexible display 112 is still in a fixed position, due to the second stable equilibrium position. The shape of the bendable support 130 is then predefined by the shape of the bi-stable spring band 140 in its second stable equilibrium position.

Furthermore, Figure 6 illustrates two fasteners 150, which may allow attaching the display device 110 to the wearable holder 105 (Figures 1 and 2). Such attaching may be achieved by corresponding screws or a hook and loop tape or the like, so that the display device 110 can be selectively attached or detached from the wearable holder 105.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. A wearable human machine interface device (100), comprising:
a flexible display device (110) configured to be bent,
**characterised in that**
the display device (110) includes:
a bendable support (130);
a flexible display (112) attached to a first side of the bendable support (130); and
at least one bi-stable spring band (140) mounted on a second side of the bendable support (130),
wherein the second side is opposite to the first side, and
wherein the at least one bi-stable spring band (140) has a first stable equilibrium position when being straight, and if the bi-stable spring band (140) is not in the first stable equilibrium position, the bi-stable spring band (140) bends or rolls.

2. The wearable device (100) of claim 1, further comprising:
a first holder (142) coupled to the second side of the bendable support (130) and holding a first end of the bi-stable spring band (140); and
a second holder (144) coupled to the second side of the bendable support (130) and holding a second end of the bi-stable spring band (140).

3. The wearable device (100) of claim 2, wherein at least one of the first and second holders (142, 144) forms a floating connection for the respective bi-stable spring band (140), particularly allowing a relative movement between the respective bi-stable spring band (140) and the at least one of the first and second holders (142, 144) in a longitudinal direction of the bi-stable spring band (140).

4. The wearable device (100) of one of claims 1 to 3, wherein the bendable support (130) comprises:
a flexible layer (134); and
a plurality of transverse bars (132) attached to the flexible layer (134) and arranged in a transverse direction being substantially perpendicular to the longitudinal direction of the bi-stable spring band (140),
wherein, preferably, the flexible layer (134) forms the first side of the bendable support (130).

5. The wearable device (100) of claim 4, wherein the plurality of transverse bars (132) are arranged spaced apart from one another with a pairwise distance (D), wherein the distance (D) defines a minimum possible radius of the bendable support (130),
wherein, preferably, the distance (D) varies along the longitudinal direction of the bi-stable spring band (140), so as to achieve a non-circular cross-section of the bendable support (130), when the bi-stable spring band (140) bends or rolls.

6. The wearable device (100) of one of claims 1 to 5, wherein the bi-stable spring band (140) is configured to achieve a second stable equilibrium position when being bent or rolled,
wherein, preferably, the bendable support (130) is configured to allow the bi-stable spring band (140) to achieve the second stable equilibrium position, or the bendable support (130) is configured to achieve a fix bent, rolled or otherwise curved shape, before the bi-stable spring band (140) reaches the second stable equilibrium position.

7. The wearable device (100) of one of claims 1 to 6, further comprising:
a side housing (120) configured to be coupled to the bendable support (130),
wherein, preferably, the side housing (120) is further configured to house a battery and/or computing components electrically connected to the flexible display (112).

8. The wearable device (100) of claim 7, wherein the side housing (120) is further configured to be detachably coupled to the bendable support (130).

9. The wearable device (100) of one of claims 1 to 8, further comprising:
a front frame (119) arranged at the first side of the bendable support (130) and covering a perimeter of the flexible display (112).

10. The wearable device (100) of one of claims 1 to 9, further comprising:
a wearable holder (105) configured to be worn by a user (10),
wherein the flexible display device (110) is configured to be coupled to the wearable holder (105).

11. The wearable device (100) of claim 10, wherein the wearable holder (105) is configured to be attached to a forearm (12) or a leg of the user (10).

12. The wearable device (100) of claim 10 or 11, wherein the display device (110) is coupled to the wearable holder (105) by means of a screw, hook and loop fastener, and/or sliding connection.

13. The wearable device (100) of one of claims 1 to 12, wherein the flexible display (112) has a size in at least one direction of at least 6 cm, preferably of at least 8 cm.

## Amended claims

### Amended claims in accordance with Rule 137(2) EPC.

1. A wearable human machine interface device (100), comprising:
a flexible display device (110) configured to be bent,
wherein the flexible display device (110) includes:
a bendable support (130);
a flexible display (112) attached to a first side of the bendable support (130); and
at least one bi-stable spring band (140) mounted on a second side of the bendable support (130),
wherein the second side is opposite to the first side, and
wherein the at least one bi-stable spring band (140) has a first stable equilibrium position when being straight, and if the bi-stable spring band (140) is not in the first stable equilibrium position, the bi-stable spring band (140) bends or rolls,
**characterised in that** the wearable device (100) further comprises:
a wearable holder (105) configured to be worn by a user (10),
wherein the flexible display device (110) is coupled to the wearable holder (105).

2. The wearable device (100) of claim 1, further comprising:
a first holder (142) coupled to the second side of the bendable support (130) and holding a first end of the bi-stable spring band (140); and
a second holder (144) coupled to the second side of the bendable support (130) and holding a second end of the bi-stable spring band (140).

3. The wearable device (100) of claim 2, wherein at least one of the first and second holders (142, 144) forms a floating connection for the respective bi-stable spring band (140), particularly allowing a relative movement between the respective bi-stable spring band (140) and the at least one of the first and second holders (142, 144) in a longitudinal direction of the bi-stable spring band (140).

4. The wearable device (100) of one of claims 1 to 3, wherein the bendable support (130) comprises:
a flexible layer (134); and
a plurality of transverse bars (132) attached to the flexible layer (134) and arranged in a transverse direction being substantially perpendicular to the longitudinal direction of the bi-stable spring band (140).

5. The wearable device (100) of claim 4, wherein the flexible layer (134) forms the first side of the bendable support (130).

6. The wearable device (100) of claim 4 or 5, wherein the plurality of transverse bars (132) are arranged spaced apart from one another with a pairwise distance (D), wherein the distance (D) defines a minimum possible radius of the bendable support (130).

7. The wearable device (100) of claim 6, wherein the distance (D) varies along the longitudinal direction of the bi-stable spring band (140), so as to achieve a non-circular cross-section of the bendable support (130), when the bi-stable spring band (140) bends or rolls.

8. The wearable device (100) of one of claims 1 to 7, wherein the bi-stable spring band (140) is configured to achieve a second stable equilibrium position when being bent or rolled,

9. The wearable device (100) of claim 8, wherein the bendable support (130) is configured to allow the bi-stable spring band (140) to achieve the second stable equilibrium position, or the bendable support (130) is configured to achieve a fix bent, rolled or otherwise curved shape, before the bi-stable spring band (140) reaches the second stable equilibrium position.

10. The wearable device (100) of one of claims 1 to 9, further comprising:
a side housing (120) configured to be coupled to the bendable support (130),
wherein, preferably, the side housing (120) is further configured to house a battery and/or computing components electrically connected to the flexible display (112).

11. The wearable device (100) of claim 10, wherein the side housing (120) is further configured to be detachably coupled to the bendable support (130).

12. The wearable device (100) of one of claims 1 to 11, further comprising:
a front frame (119) arranged at the first side of the bendable support (130) and covering a perimeter of the flexible display (112).

13. The wearable device (100) of one of claims 1 to 12, wherein the wearable holder (105) is configured to be attached to a forearm (12) or a leg of the user (10).

14. The wearable device (100) of one of claims 1 to 13, wherein the display device (110) is coupled to the wearable holder (105) by means of a screw, hook and loop fastener, and/or sliding connection.

15. The wearable device (100) of one of claims 1 to 14, wherein the flexible display (112) has a size in at least one direction of at least 6 cm, preferably of at least 8 cm.
